# EUROPÄISCHE PATENTSCHRIFT

(11) **EP 0 640 775 B1**
(45) Veröffentlichungstag und Bekanntmachung des Hinweises auf die Patenterteilung: **27.11.1996**
(21) Anmeldenummer: 94103961.2
(22) Anmeldetag: 15.03.1994
(51) Int. Cl.: F16F 7/10, F16F 1/44, F16F 1/393

(54) **Schwingungstilger**
Vibration damper
Amortisseur de vibration

(30) Priorität: 26.08.1993 DE 4328667
(43) Veröffentlichungstag der Anmeldung: 01.03.1995
(73) Patentinhaber: Firma Carl Freudenberg, D-69469 Weinheim (DE)
(72) Erfinder: Hamaekers, Arno, D-69517 Gorxheim-Unterflockenbach (DE)

(56) Entgegenhaltungen:
- BE-A- 661 488
- DE-U- 1 992 297
- US-A- 1 857 168
- US-A- 2 698 958
- US-A- 3 030 099

## Beschreibung

Die Erfindung betrifft einen Schwingungstilger, umfassend eine formbeständige Trägheitsmasse, die durch ein Federelement aus gummielastischem Werkstoff festgehalten ist.

Ein solcher Schwingungstilger ist aus der US 4,610,420, Fig. 9 bekannt. Die formstabile Trägheitsmasse ist an das Federelement aus gummielastischem Werkstoff anvulkanisiert.

Der Erfindung liegt die Aufgabe zugrunde, einen Schwingungstilger der vorbekannten Art derart weiterzuentwickeln, daß er in fertigungstechnischer und wirtschaftlicher Hinsicht einfacher und kostengünstiger herstellbar ist.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß an dem Federelement ein metallisches Klemmelement befestigt ist und daß das Klemmelement und die Trägheitsmasse kraftschlüssig aneinander festgelegt sind. Hierbei ist von Vorteil, daß die Herstellung des Schwingungstilgers aus nur zwei separat erzeugten Bauteilen besteht, wobei das Federelement und das metallische Klemmelement eine vormontierbare Einheit bilden. Das metallische Klemmelement kann beispielsweise in das Federelement einvulkanisiert sein, wobei das Klemmelement kraftschlüssig und unverrückbar durch elastische und/oder plastische Verformung mit der Trägheitsmasse verbunden ist. Die Montage des Schwingungstilgers gestaltet sich dadurch besonders einfach. Die Trägheitsmasse kann beispielsweise durch einen aus einem metallischen Werkstoff gegossenen Werkstoffkörper bestehen, der mit einer Ausnehmung versehen ist. Das Klemmelement weist bevorzugt eine an die Ausnehmung angepaßte Gestalt auf und wird während der Montage in die Ausnehmung der Trägheitsmasse eingepreßt und anschließend in der Ausnehmung kraftschlüssig gehalten.

Gemäß einer vorteilhaften Ausgestaltung kann die Trägheitsmasse einen Vorsprung aufweisen, wobei das Klemmelement eine Durchstecköffnung aufweist, die auf den Vorsprung aufgepreßt ist. Der Vorsprung, der die Durchstecköffnung des Klemmelements im montierten Zustand durchdringt, bewirkt während der Montage des Schwingungstilgers eine exakte räumliche Zuordnung der kraftschlüssig aneinander festgelegten Bauteile. Der Vorsprung und die Durchstecköffnung bewirken eine Zentrierung der beiden Teile zueinander.

Der Vorsprung kann einen sich in Anpreßrichtung vergrößernden Querschnitt aufweisen, der mit einer kongruent geformten Ausnehmung des Federelements in Eingriff bringbar ist. Die beispielsweise konische Gestalt des Vorsprungs bedingt eine allmänliche Zentrierung von Trägheitsmasse und Federelement relativ zueinander, da der Vorsprung während der Montage nur mit Teilbereichen seiner Oberfläche die Ausnehmung des Federelements anliegend berührt. Die Reibung während der Montage ist daher vergleichsweise gering. Nach abgeschlossenem Fügevorgang berührt der Vorsprung die Ausnehmung des Federelements dagegen im Bereich seiner gesamten Oberfläche unter elastischer Vorspannung. Zusätzlich zu der kraftschlüssigen Verbindung des Klemmelements innerhalb der Trägheitsmasse bewirkt die reibschlüssige Verbindung zwischen dem Vorsprung und der Ausnehmung eine zusätzliche Sicherheit gegen eine Relativverschiebung der Trägheitsmasse bezogen auf das Klemmelement, das mit dem Federelement verbunden ist. Eine kegelstumpfförmige Gestalt des Vorsprungs hat sich als besonders zweckdienlich erwiesen.

Die Trägheitsmasse kann eine Ausnehmung aufweisen, wobei das Klemmelement in die Ausnehmung eingepreßt ist. Hierbei ist von Vorteil, daß es sekundärer Hilfsmittel, wie beispielsweise Klebstoff oder Schraubenverbindungen zur Festlegung des Federelements an der Trägheitsmasse nicht bedarf. Ein derart ausgebildeter Schwingungstilger kann in geringer Fertigungszeit in großen Stückzahlen wirtschaftlich günstig hergestellt werden.

Die Ausnehmung kann einen sich in Anpreßrichtung verkleinernden Querschnitt aufweisen. Hierbei ist von Vorteil, daß eine verbesserte Zentrierung der Trägheitsmasse bezogen auf das Federelement erfolgt, wobei nach einer bevorzugten Ausführungsform eine Verpressung des Klemmelements innerhalb der Ausnehmung der Trägheitsmasse erst dann erfolgt, wenn die beiden Teile bereits soweit vereint sind, daß der Vorsprung der Trägheitsmasse die Mündung der Ausnehmung des Federelements bereits überdeckt. Dadurch ist gewährleistet, daß eine im wesentlichen verkantungsfreie Montage der Teile erfolgen kann.

Gemäß einer vorteilhaften Ausgestaltung kann sich das Klemmelement im wesentlichen quer zur Längsrichtung des Vorsprungs bzw. der Ausnehmung erstrecken und im Randbereich ein entgegen der Anpreßrichtung verformtes Profil aufweisen. Die Montage des mit dem Klemmelement verbundenen Federelements erfolgt durch den entgegen der Anpreßrichtung verformten Randbereich vergleichsweise kräftearm. Der Randbereich verformt sich während der Montage elastisch nachgiebig in raidaler Richtung nach innen. Wirken während der bestimmungsgemäßen Verwendung des Schwingungstilgers beispielsweise Kräfte in Anpreßrichtung auf die Trägheitsmasse oder entgegen der Anpreßrichtung auf das Federelement ergibt sich durch den entgegen der Anpreßrichtung verformten Randbereich des Klemmelements eine Keilwirkung und eine verstärkte kraftschlüssige Festlegung der Teile aneinander. Der widerhakenförmige Randbereich ermöglicht eine ortsfeste Festlegung der Trägheitsmasse zu dem Federelements während der gesamten Gebrauchsdauer des Schwingungstilgers.

Das Klemmelement kann das Profil des Federelements randseitig mit zumindest einem Befestigungsvorsprung überragen. Das Klemmelement kann beispielsweise durch eine im wesentlichen kreisförmige Scheibe gebildet sein, die im herstellungsbedingten Zustand einen größeren Außendurchmesser aufweist als die kreisförmige Ausnehmung der Trägheitsmasse im Bereich ihrer engsten Stelle. Diese Ausgestaltung bedingt eine entlang des gesamten Außenumfangs des Klemmelements weitgehend gleichmäßige Verpressung in radialer Richtung, so daß es, nicht zu Ausweichbewegungen und somit einer Lockerung der kraftschlüssigen Verbindung zwischen den aneinander festgelegten Teilen kommen kann. Eine sichere Festlegung während einer langen Gebrauchsdauer ist dadurch gegeben. Gelangen beispielsweise gleichmäßig in Umfangsrichtung verteilte Befestigungsvorsprünge zur Anwendung, hat es sich als sinnvoll erwiesen, wenn zumindest drei, bevorzugt fünf gleichmäßig in Umfangsrichtung verteile Vorsprünge vorgesehen sind. Unabhängig von der Richtung eventuell radial eingeleiteter Bewegungen wird eine Relativverschiebung des Klemmelements bezogen auf die Trägheitsmasse parallel zur Anpreßrichtung bei gleichzeitiger Einleitung betriebsbedingter Schwingungen sicher ausgeschlossen.

Der Befestigungsvorsprung kann mit einer Schicht aus gummielastischem Werkstoff überzogen sein. Herstellungsbedingte Toleranzen des Klemmelements und/oder der Ausnehmung innerhalb der Trägheitsmasse vermögen bei einer derartigen Ausgestaltung die Montage des Schwingungstilgers nicht zu beeinflussen, was im Hinblick auf eine einfache, maschinelle Fertigung des Schwingungstilgers von hervorzuhebender Bedeutung ist. Außerdem ist von Vorteil, daß durch die vollständige Ummantelung des Klemmelements mit gummielastischem Werkstoff Kontaktkorrosion zwischen der Trägheitsmasse und dem Klemmelement zuverlässig vermieden wird.

Die Trägheitsmasse kann im Sandgußverfahren erzeugt und im Bereich des Vorsprungs bzw. der Ausnehmung nicht spanabhebend bearbeitet sein. Hierbei ist von Vorteil, daß die durch das Sandgußverfahren bedingte Oberflächenrauigkeit der Trägheitsmasse eine sichere Festlegung des Klemmelements innerhalb der Ausnehmung der Trägheitsmasse begünstigt. Zwischen dem vollständig mit elastomerem Werkstoff ummantelten Klemmelement und der unbearbeiteten Oberfläche der Ausnehmung sowie dem unbearbeiteten Befestigungsvorsprung der Trägheitsmasse und der Ausnehmung innerhalb des Federelements ergibt sich im montierten Zustand des Schwingungstilgers eine zusätzliche formschlüssige Verkrallung, die die kraftschlüssige Festlegung zwischen dem Klemmelement und der Trägheitsmasse unterstützt. Dadurch, daß eine nachträgliche Bearbeitung der im Sandgußverfahren hergestellten Trägheitsmasse entbehrlich ist, ist der erfindungsgemäße Schwingungstilger kostengünstig herstellbar.

Ein Ausführungsbeispiel des erfindungsgemäßen Schwingungstilgers ist in den Zeichnungen schematisch dargestellt und wird im folgenden näher beschrieben.

In Fig. 1 sind die Einzelteile des Schwingungstilgers gezeigt, die zusammengefügt werden.
In Fig. 2 ist der erfindungsgemäße Schwingungstilger als Gesamtheit dargestellt.

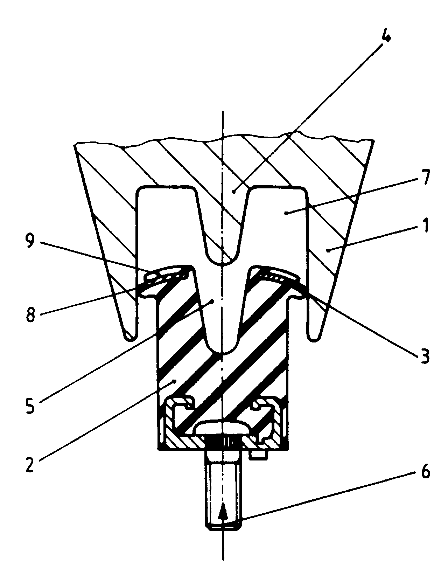

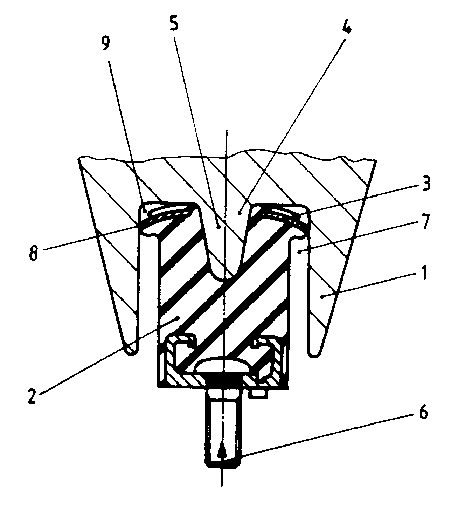

In den Fig. 1 und 2 ist ein Ausführungsbeispiel eines Schwingungstilgers gezeigt, der im wesentlichen aus einer Trägheitsmasse 1, einem Federelement 2 aus gummielastischem Werkstoff und einem metallischen Klemmelement 3 besteht. Die Trägheitsmasse besteht aus Gußeisen, ist im Sandgußverfahren erzeugt und im Anschluß an ihre Herstellung nicht bearbeitet. Das Federelement 2 umschließt auf der der Trägheitsmasse 1 zugewandten Seite das im wesentlichen scheibenförmig ausgebildete Klemmelement 3 vollständig, wobei das Klemmelement 3 und der elastomere Werkstoff des Federelements 2 jeweils eine zentrale Ausnehmung aufweisen, die eine an den Vorsprung 4 der Trägheitsmasse 1 angepaßte Gestalt aufweist. Die Ausnehmung 7 der Trägheitsmasse 1 ist kreisförmig gestaltet, ebenso wie das Federelement 2 und das von dem Federelement 2 ummantelte Klemmelement 3. Die Ausnehmung 7 der Trägheitsmasse 1 ist in Anpreßrichtung 6 kontinuierlich in ihrem Querschnitt verringert, um eine in Anpreßrichtung 6 zunehmende Verpressung des Klemmelements 3 innerhalb der Trägheitsmasse 1 zu erzielen. Der Befestigungsvorsprung 8 ist in seinem Randbereich, der das Federelement 2 randseitig übergreift, entgegen der Anpreßrichtung 6 verformt, um eine in Anpreßrichtung 6 vergleichsweise einfache Montage durch elastische Verformung zu gewährleisten. Wirken beispielsweise Kräfte in Anpreßrichtung 6 auf die Trägheitsmasse 1, ergibt sich durch den widerhakenförmigen Randbereich des Klemmelements 3 eine zusätzliche Verpressung der ineinander befestigten Teile in radialer Richtung, so daß eine Relativbewegung zwischen den beiden aneinander befestigten Teilen nicht erfolgt.

In Fig. 1 ist die relative Lage der Trägheitsmasse 1 bezogen auf das Federelement 2 und das vom Federelement 2 umschlossene Klemmelement 3 während der Montage gezeigt. Das Klemmelement 3 ist in die Ausnehmung 7 der Trägheitsmasse 1 bereits eingeführt, ohne daß der Vorsprung 4 der Trägheitsmasse 1 die Mündung der Ausnehmung des Federelements 2 überdenkt. Die hier dargestellte Zuordnung stellt eine vorläufige Positionierung der ineinander einfügbaren Teile dar.

In Fig. 2 ist der Schwingungstilger im montierten Zustand gezeigt. Das Federelement und das Klemmelement 2, 3 sind in Anpreßrichtung 6 soweit in die Ausnehmung 7 der Trägheitsmasse 1 eingeführt, daß die stirnseitige Begrenzung des Federelements 2 den Grund der Ausnehmung 7 berührt. Der Vorsprung 4 der Trägheitsmasse 1 ist unter radialer Vorspannung vom Federelement 2, das die Ausnehmung begrenzt, umschlossen.

## Patentansprüche

1. Schwingungstilger, umfassend eine formbeständige Trägheitsmasse, die durch ein Federelement aus gummielastischem Werkstoff festgehalten ist, dadurch gekennzeichnet, daß an dem Federelement (2) ein metallisches Klemmelement (3) befestigt ist und daß das Klemmelement (3) und die Trägheitsmasse (1) kraftschlüssig aneinander festgelegt sind.

2. Schwingungstilger nach Anspruch 1, dadurch gekennzeichnet, daß die Trägheitsmasse (1) einen Vorsprung (4) aufweist und daß das Klemmelement (3) eine Durchstecköffnung (5) aufweist, die auf den Vorsprung (4) aufgepreßt ist.

3. Schwingungstilger nach Anspruch 2, dadurch gekennzeichnet, daß der Vorsprung (4) einen sich in Anpreßrichtung (6) vergrößernden Querschnitt aufweist.

4. Schwingungstilger nach Anspruch 1 bis 3, dadurch gekennzeichnet, daß die Trägheitsmasse (1) eine Ausnehmung (7) aufweist und daß das Klemmelement (3) in die Ausnehmung (7) eingepreßt ist.

5. Schwingungstilger nach Anspruch 4, dadurch gekennzeichnet, daß die Ausnehmung (7) einen sich in Anpreßrichtung (6) verkleinernden Querschnitt aufweist.

6. Schwingungstilger nach Anspruch 1 bis 5, dadurch gekennzeichnet, daß das Klemmelement (3) sich im wesentlichen quer zur Längsrichtung des Vorsprunges (4) bzw. der Ausnehmung (7) erstreckt und im Randbereich ein entgegen der Anpreßrichtung (6) verformtes Profil aufweist.

7. Schwingungstilger nach Anspruch 1 bis 6, dadurch gekennzeichnet, daß das Klemmelement (3) das Profil des Federelements (2) randseitig mit zumindest einem Befestigungsvorsprung (8) überragt.

8. Schwingungstilger nach Anspruch 7, dadurch gekennzeichnet, daß der Befestigungsvorsprung (8) mit einer Schicht (9) aus gummielastischem Werkstoff überzogen ist.

9. Schwingungstilger nach Anspruch 1 bis 8, dadurch gekennzeichnet, daß die Trägheitsmasse (1) im Sandgußverfahren erzeugt und im Bereich des Befestigungsvorsprungs (4) bzw. der Ausnehmung (7) nicht spanabhebend bearbeitet ist.

## Claims

1. A vibration absorber comprising a dimensionally stable inertial mass which is gripped fast by a spring element made of rubber-elastic material, characterized in that a metallic clamping element (3) is attached to the spring element (2) and in that the clamping element (3) and the inertial mass (1) are fixed to one another nonpositively.

2. A vibration absorber according to claim 1, characterized in that the inertial mass (1) has a projection (4) and in that the clamping element (3) has an entry opening (5) which is pressed onto the projection (4).

3. A vibration absorber according to claim 2, characterized in that the projection (4) has a cross-section which increases in the press-on direction (6).

4. A vibration absorber according to any of claims 1 to 3, characterized in that the inertial mass (1) has a recess (7) and in that the clamping element (3) is pressed into the recess (7).

5. A vibration absorber according to claim 4, characterized in that the recess (7) has a cross-section which decreases in the press-on direction (6).

6. A vibration absorber according to any of claims 1 to 5, characterized in that the clamping element (3) extends essentially transversely to the longitudinal direction of the projection (4) and/or of the recess (7) and, in the edge region, has a profile which is deformed counter to the press-on direction (6).

7. A vibration absorber according to any of claims 1 to 6, characterized in that the clamping element (3) projects beyond the profile of the spring element (2) at the edge by means of at least one fixing projecting (8).

8. A vibration absorber according to claim 7, characterized in that the fixing projection (8) is covered with a layer (9) of rubber elastic material.

9. A vibration absorber according to any of claims 1 to 8, characterized in that the inertial mass (1) is produced by sand-casting and is machined by a method, which does not involve the formation of chips, in the region of the fixing projection (4) and/or of the recess (7).

## Revendications

1. Amortisseur de vibrations comprenant une masse d'inertie résistante à la déformation qui est tenue par un élément élastique fait de gomme élastique, caractérisé en ce qu'un élément de serrage (3) métallique est fixé sur l'élément élastique (2) et en ce que l'élément de serrage (3) et la masse d'inertie (1) sont fixés l'un sur l'autre par adhérence.

2. Amortisseur de vibrations selon la revendication 1, caractérisé en ce que la masse d'inertie (1) est pourvue d'une saillie (4) et en ce que l'élément de serrage (3) est pourvu d'une ouverture de passage (5) qui est pressée sur la saillie (4).

3. Amortisseur de vibrations selon la revendication 2, caractérisé en ce que la saillie (4) a une section transversale qui augmente dans la direction (6) de pression.

4. Amortisseur de vibrations selon l'une des revendications 1 à 3, caractérisé en ce que la masse d'inertie (1) est pourvue d'un évidement (7) et en ce que l'élément de serrage (3) est introduit dans l'évidement (7) en pressant.

5. Amortisseur de vibrations selon la revendication 4, caractérisé en ce que l'évidement (7) a une section transversale qui diminue dans la direction (6) de pression.

6. Amortisseur de vibrations selon l'une des revendications 1 à 5, caractérisé en ce que l'élément de serrage (3) s'étend essentiellement de manière perpendiculaire à la direction longitudinale de la saillie (4) resp. de l'évidement (7) et est pourvu, dans la région de son bord, d'un profil déformé dans le sens contraire à la direction (6) de pression.

7. Amortisseur de vibrations selon l'une des revendications 1 à 6, caractérisé en ce que l'élément de serrage (3) dépasse le profil de l'élément élastique (2) du côté du bord avec au moins une saillie de fixation (8).

8. Amortisseur de vibrations selon la revendication 7, caractérisé en ce que la saillie de fixation (8) est couverte par une couche (9) en gomme élastique.

9. Amortisseur de vibrations selon l'une des revendications 1 à 8, caractérisé en ce que la masse d'inertie (1) est fabriquée dans un procédé de coulage en sable et n'est pas usinée par enlèvement de copeaux dans la région de la saillie de fixation (4) resp. de l'évidement (7).
